# DEMANDE DE BREVET EUROPEEN

(11) **EP 1 710 710 A1**
(43) Date de publication de la demande: **11.10.2006**
(21) Numéro de dépôt: 06290531.0
(22) Date de dépôt: 03.04.2006
(51) Int. Cl.: G06F 13/42

(54) **Interface de circuits dans un circuit électronique integré**

(30) Priorité: 04.04.2005 FR 0503325
(71) Demandeur: STMicroelectronics SA, 92120 Montrouge (FR)
(72) Inventeur: Luculli, Gabriele, 38330 Montbonnot Saint Martin (FR)
(74) Mandataire: Verdure, Stéphane

(57) **Abrégé**

Des conducteurs internes assurent un transfert de données entre un circuit émetteur (2) et un circuit récepteur (1) dans un circuit électronique intégré. Le circuit récepteur (1) comporte un tampon d'entrée (12) apte à recevoir des données et une borne de sortie (13) pour envoyer au circuit émetteur une information d'extraction (POPOUT) à chaque extraction d'un mot de données du tampon d'entrée. Le circuit émetteur comporte un circuit de validation (24) apte à activer un signal de validation (POPIN) en fonction d'une information de disponibilité représentative de l'espace mémoire disponible dans le tampon d'entrée. Cette information de disponibilité est mise à jour dans le circuit émetteur à chaque envoi d'un mot de données et/ou à chaque réception de l'information d'extraction.

## Description

L'invention se rapporte à l'interfaçage de circuits électroniques. Plus particulièrement, l'invention concerne l'interfaçage de deux circuits, à l'intérieur d'un circuit électronique intégré, les deux circuits étant reliés l'un à l'autre par des conducteurs introduisant des temps de propagation important.

Plus particulièrement, l'invention concerne le contrôle de flux de données entre différentes entités à l'intérieur d'un circuit électronique intégré.

La technologie des circuits intégrés permet de réaliser des circuits complexes sur une unique puce de silicium. L'évolution de la technologie permet en effet d'obtenir une précision de gravure de plus en plus fine qui permet d'accroître le nombre de transistors pour une surface donnée tout en augmentant la vitesse de fonctionnement et en diminuant la consommation électrique. Les circuits de grandes dimensions, par exemple ayant une surface supérieure au centimètre carré, qui sont actuellement réalisés avec une finesse de gravure inférieure à 90 nm, peuvent ainsi comporter plus d'un milliard de transistors tout en fonctionnant à des fréquences supérieures au Giga Hertz.

Des circuits électroniques intégrés de grandes dimensions sont appelés « système sur une puce » ou SOC (de l'anglais "System On a Chip") car ils correspondent à des systèmes électroniques complets pouvant comprendre plusieurs circuits élémentaires tels que des microprocesseurs, des mémoires et de nombreuses interfaces. La conception des SOC se fait en assemblant plusieurs circuits électroniques conçus individuellement. Les différents circuits électroniques communiquent entre eux par des conducteurs électriques des moyens d'interfaçage appropriés.

Des moyens d'interfaçage connus comprennent des tampons de données disposés en entrée des circuits électroniques à interfacer. Les tampons de données sont par exemple du type "premier entré premier sorti", plus connu sous l'abréviation FIFO (de l'anglais "First In-First Out"). Ces tampons de données permettent de recevoir et mémoriser des données afin de réguler le flot de données en fonction de la disponibilité du circuit. Ainsi, un circuit émetteur de données peut envoyer des données à un circuit destinataire avant que ce dernier soit disponible pour les traiter. Cependant, avant d'envoyer des données vers un tampon de données, il est souhaitable de s'assurer que celui-ci dispose de la capacité suffisante pour recevoir et mémoriser ces données en vue de leur traitement.

Classiquement, les tampons FIFO disposent de sorties délivrant des informations d'état de remplissage, qui indiquent par exemple si le tampon est plein, à moitié plein ou vide. Un problème survient lorsque le circuit intégré est de grandes dimensions et fonctionne à des fréquences d'horloge élevées. Plus la fréquence d'horloge est élevée, plus le temps séparant deux envois de données est bref. Par ailleurs, dans un circuit intégré de grandes dimensions, les conducteurs électriques assurant la liaison entre deux circuits peuvent être relativement longs et donc introduire des temps de propagation importants, qui peuvent être supérieurs à une période du signal d'horloge servant à synchroniser le transfert des données. Dans une telle situation, l'information d'état de remplissage peut parvenir au circuit émetteur après l'envoi d'un surplus de données, ce qui provoque une perte de données.

Une technique pour remédier à ce problème consiste à vérifier avant chaque envoi de données si le tampon du circuit destinataire n'est pas plein. Une telle technique ralentit considérablement les transferts de données car il est alors nécessaire d'attendre deux fois le temps de propagation nécessaire à l'acheminement des données sur un conducteur entre deux envois des données successifs.

Un problème similaire de vérification de l'état de remplissage de tampon de données existe dans le domaine des réseaux à large bande. Il est nécessaire de s'assurer au niveau d'un dispositif émetteur que le tampon de données d'un dispositif récepteur dispose d'espace mémoire suffisant avant d'envoyer des paquets de données, pour éviter des pertes d'information.

L'article « Credit-Based Flow Control for ATM Networks », H.T. KUNG et R. MORRIS, IEEE Network Magazine, Mars 1995, divulgue une solution pour améliorer la gestion des envois de données vers un tampon de données distant sans avoir à attendre une information d'état de remplissage dudit tampon. La solution apportée consiste à prévoir un compteur dans le dispositif émetteur de données pour comptabiliser la quantité de données envoyée vers un dispositif récepteur de données. Le dispositif récepteur de données dispose également d'un compteur pour comptabiliser la quantité de données extraite du tampon de données. Régulièrement, l'état du compteur du dispositif récepteur est envoyé au dispositif émetteur et ledit compteur est remis à zéro. A réception, le dispositif émetteur de données calcule l'espace restant disponible dans le tampon de données en soustrayant la quantité de données envoyée et en ajoutant la quantité de données extraite, à une variable correspondant à la capacité de mémorisation totale du tampon de données.

Cependant, un tampon de données d'un réseau à large bande tel qu'un réseau ATM est de taille très importante, par exemple de l'ordre de quelques mégabits et il est possible d'utiliser des moyens de gestion conséquents. Dans le cas d'un circuit intégré, les tampons de données ont une petite capacité, par exemple quelques dizaines d'octets. C'est pourquoi il n'est pas envisageable d'avoir dans un circuit intégré un système de gestion aussi important que celui d'un réseau à large bande.

D'un autre côté, dans un réseau à large bande tel qu'ATM, des données peuvent être perdues, alors que dans un circuit intégré les données arrivent toujours correctement à destination, étant donné que la liaison est une bande de métal.

L'invention propose une solution pour remédier au problème du remplissage d'un tampon de données placé sur une longue liaison interne d'un circuit électronique intégré. La liaison interne assure le transfert de données entre un circuit émetteur et un circuit récepteur tous deux compris dans le circuit intégré. Le circuit récepteur comporte un tampon de données apte à recevoir des données sous la forme de mots (un mot de données comprenant un nombre n de bits, où n est un entier non nul, mais pouvant être égal à l'unité) et une borne de sortie pour envoyer au circuit émetteur une information d'extraction lors de l'extraction d'un mot dudit tampon. Le circuit émetteur gère une information de disponibilité, représentative de l'espace mémoire disponible dans le tampon d'entrée. Cette information est mise à jour à chaque envoi d'un mot de données par le circuit émetteur et/ou à chaque réception d'une information d'extraction par le circuit émetteur.

Un premier aspect de l'invention est un circuit électronique intégré comportant :
- un premier circuit (ou circuit récepteur) comprenant :
   - un port d'entrée pour recevoir des mots de données,
   - une borne d'entrée pour recevoir un signal de validation,
   - un tampon d'entrée couplé au port d'entrée et apte à mémoriser de manière temporaire un nombre déterminé de mots de données reçus via le port d'entrée, un mot de données étant mémorisé dans ledit tampon en réponse à l'activation du signal de validation,
   - une borne de sortie pour envoyer une information d'extraction lorsqu'un mot de données est extrait du tampon d'entrée ;
- un second circuit (ou circuit émetteur) comprenant :
   - un port de sortie pour l'envoi d'un mot de données,
   - une borne de sortie pour envoyer le signal de validation,
   - une borne d'entrée pour recevoir l'information d'extraction,
   - un circuit de validation apte à activer le signal de validation en fonction d'une information représentative de l'espace mémoire disponible dans le tampon d'entrée, ladite information de disponibilité étant mise à jour à chaque envoi d'un mot de données et à chaque réception de l'information d'extraction ; et,
- une pluralité de conducteurs reliant entre eux le premier circuit et le second circuit, et comprenant un bus de données reliant le port d'entrée du circuit récepteur au port de sortie du circuit émetteur, et une liaison reliant la borne d'entrée du circuit récepteur à la borne de sortie du circuit émetteur, et une liaison reliant la borne de sortie du circuit récepteur à la borne d'entrée du circuit émetteur.

Ainsi, contrairement à un réseau à large bande tel qu'un réseau ATM qui comprend un unique lien bidirectionnel reliant un émetteur et un récepteur sur lequel transite tout le trafic (données utiles et informations de signalisation), le circuit défini ci-dessus possède plusieurs liaisons monodirectionnelles, notamment une liaison de transmission de données utiles aller (c'est-à-dire depuis l'émetteur jusqu'au récepteur), et deux liaisons de contrôle pour la transmission de données de signalisation dont une liaison aller et une liaison retour (depuis le récepteur jusqu'à l'émetteur). De ce fait, le contrôle de flux est simple et optimisé.

En outre, contrairement à un protocole de contrôle de flux mis en oeuvre dans un réseau à large bande tel qu'un réseau ATM dans lequel la réception de paquets de données est acquittée par l'émission d'un message d'acquittement tous les N paquets reçus seulement, l'information d'extraction gérée dans le circuit tel que défini ci-dessus est mise à jour à chaque cycle d'horloge. De ce fait, le contrôle de flux présente de meilleures performances.

Dans un mode de réalisation, le circuit de validation comporte un compteur qui est incrémenté à chaque réception de l'information d'extraction et qui est décrémenté à chaque activation du signal de validation, la valeur courante du compteur correspondant à l'information de disponibilité.

Dans un mode de réalisation, le circuit de validation comporte un circuit logique qui active le signal de validation lorsqu'un un mot de données est présent sur le port de sortie si la valeur du compteur indique que le tampon d'entrée possède de l'espace mémoire disponible pour l'enregistrement d'au moins un mot de données.

Lorsque les conducteurs présentent un temps de propagation des données compris entre k - 1 et k fois le temps minimal pouvant séparer deux mots de données successivement envoyés via lesdits conducteurs, où k est un entier positif, le nombre de mots de données pouvant être mémorisés simultanément dans le tampon d'entrée peut avantageusement être supérieur ou égal à 2 x k. Ceci permet un transfert de données avec un débit maximum, car ce débit n'est plus, en cas de fonctionnement normal, n'est pas limité par le contrôle de flux mais seulement par la bande passante du bus de données. Cependant, cette caractéristique n'est pas obligatoire, car le procédé de contrôle de flux fonctionne correctement dès lors qu'au moins un mot de données peut être mémorisé dans le tampon d'entrée, ce qui est le minimum.

De préférence, une information d'extraction est envoyée par le premier circuit à chaque fois qu'un mot de données est extrait du tampon d'entrée.

Un second aspect de l'invention se rapporte à un procédé de transfert de données entre un premier circuit et un second circuit compris dans un circuit électronique intégré, lesdits premier et second circuits étant reliés ensemble par l'intermédiaire d'une pluralité de conducteurs, et le premier circuit comprenant un tampon de données apte à mémoriser de façon temporaire un nombre déterminé de mots de données, ledit procédé comprenant les étapes suivantes :
- envoi par le second circuit d'un mot de données à destination du tampon de données si une information de disponibilité représentative de l'espace mémoire disponible dans le tampon d'entrée indique qu'au moins un mot de données peut être mémorisé dans ledit tampon d'entrée ;
- en réponse à l'extraction d'un mot de données du tampon, envoi par le premier circuit d'une information d'extraction à destination du second émetteur ;
- en réponse à un envoi d'un mot de données par le second circuit et/ou en réponse à la réception par le second circuit d'une information d'extraction, mise à jour de l'information de disponibilité par le second circuit.

Dans un mode de mise en oeuvre, l'envoi d'un mot de données par le second circuit comprend les étapes de :
- mise du mots de données sur un bus de données reliant un port de sortie du premier circuit à un port d'entrée du premier circuit, et,
- activation d'un signal de validation transmis entre une borne de sortie du second circuit et entre une borne d'entrée du premier circuit, si l'information de disponibilité indique que le tampon d'entrée possède de l'espace mémoire disponible par l'enregistrement d'au moins un mot de données.

De préférence, la mise à jour de l'indicateur de disponibilité est réalisée par incrémentation de la valeur d'un compteur en réponse à la réception par le second circuit d'une information d'extraction, et par décrémentation de la valeur dudit compteur en réponse à l'envoi d'un mots de données par le second circuit.

L'invention sera mieux comprise et d'autres particularités et avantages apparaîtront à la lecture de la description qui va suivre, faite en référence aux dessins annexés parmi lesquels :
- la figure 1 est un schéma d'un exemple d'interfaçage entre deux circuits dans un circuit électronique intégré, selon un mode de réalisation de l'invention ;
- la figure 2 est un schéma d'un circuit de validation d'envoi assurant la gestion de l'envoi des données ;
- la figure 3 montre des chronogrammes d'échanges de données entre les deux circuits ; et,
- la figure 4 est un schéma d'un autre exemple d'interfaçage entre deux circuits dans un circuit électronique intégré selon un autre mode de réalisation de l'invention.

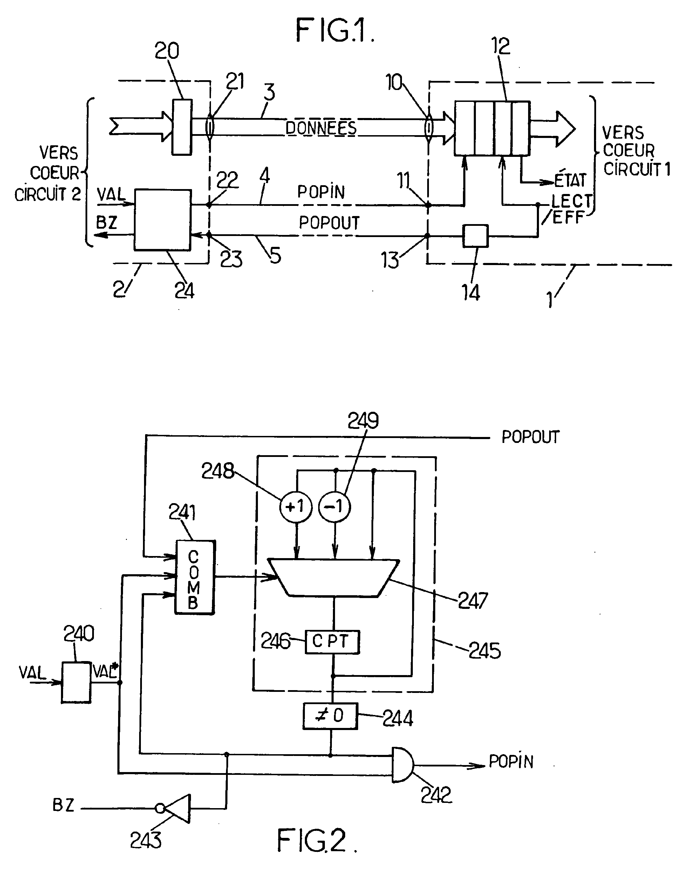

La figure 1 représente une portion d'un circuit électronique intégré qui comporte un étage d'entrée d'un premier circuit 1 relié à un étage de sortie d'un second circuit 2 par l'intermédiaire de conducteurs 3 à 5. Le circuit intégré comprend un réseau de distribution d'un signal d'horloge, qui n'est pas représenté pour éviter de surcharger les dessins. Le réseau de distribution du signal d'horloge permet d'acheminer le signal d'horloge de manière synchrone à tous les circuits qui utilisent ledit signal, selon une technique connue.

Dans une configuration d'utilisation, le premier circuit 1 correspond à un circuit récepteur de données dont l'étage d'entrée comporte un port d'entrée 10, une borne d'entrée 11, un tampon de données 12, une borne de sortie 13 et un registre 14. Le deuxième circuit 2 correspond à un circuit émetteur de données dont l'étage de sortie comporte un registre de données 20, un port de sortie 21, une borne de sortie 22, une borne d'entrée 23 et un circuit de validation 24.

Le port d'entrée 10 et le port de sortie 21 sont reliés ensemble par les conducteurs 3 formant un bus de liaison point à point, par exemple un bus parallèle, bien qu'un bus série et plus généralement tout type de liaison de données soient également envisageables.

La borne d'entrée 11 est reliée à la borne de sortie 22 par le conducteur 4, qui transporte un signal de validation POPIN. La borne d'entrée 23 est reliée à la borne de sortie 13 par le conducteur 5 qui transporte une information d'extraction POPOUT. Les conducteurs 3 à 5 sont typiquement de grande longueur, en ce sens qu'ils entraînent des délais de propagation importants par rapport à la période du signal d'horloge. Toutefois les différences de longueur entre lesdits conducteurs 3 à 5 sont peu importantes. Ainsi, on peut considérer que les délais de propagation sur les conducteurs 3 à 5 sont sensiblement les mêmes et n'engendrent pas de différence de phase entre deux informations envoyées simultanément sur deux conducteurs distincts.

Le registre 20 du circuit émetteur 2 sert à mémoriser un mot de données à envoyer. Une entrée de données du registre 20 est reliée au coeur du circuit 2, et une sortie du registre 20 est reliée au bus de sortie 21. Sur un front actif du signal d'horloge, le registre 20 mémorise un mot de données présent en entrée et peut le fournir en sortie sur le front actif suivant. Le mot de données est fourni par le coeur du circuit 2 qui fournit également un signal VAL qui indique que le mot présent dans le registre 20 doit être envoyé vers le premier circuit 1.

Le tampon de données 12 du circuit récepteur 1 permet de mémoriser de manière temporaire un nombre déterminé de mots de données reçus en provenance du circuit 2. Un tel tampon permet de temporiser et réguler les données pour les fournir au coeur du circuit 1 en tenant compte de la disponibilité dudit coeur. Le tampon de données 12 est par exemple un tampon de type FIFO, qui dispose d'une entrée de mot reliée au port d'entrée 10, d'une entrée de validation de mot d'entrée reliée à la borne d'entrée 11, d'une entrée de lecture/effacement de mot reliée au coeur du circuit 1, d'une sortie de mot et d'une sortie d'état toutes deux reliées au coeur du circuit 1.

L'écriture dans le tampon 12 d'un mot présente sur l'entrée de mot se fait en réponse à un front actif du signal d'horloge lorsque le signal de validation POPIN est actif. La sortie de mot délivre le mot mémorisé le plus ancien, lorsque le signal de lecture/effacement LECT/EFF présent sur l'entrée de lecture/effacement est actif et quand apparaît un front actif du signal d'horloge. Le mot présent en sortie est alors considéré comme lu. Il peut être effacé par l'écriture d'un mot qui est ultérieurement mémorisé dans le tampon. Si le tampon 12 ne contient pas de mot, notamment si tous les mots mémorisés ont été lus, alors la sortie d'état indique que le tampon 12 est vide.

Le registre 14 est par exemple un registre pour un seul bit, dont l'entrée est reliée au coeur du circuit 1 et la sortie est reliée à la borne de sortie 13. Le registre 14 sert à échantillonner le signal présent à l'entrée de lecture/effacement afin de fournir une donnée POPOUT représentative de l'extraction d'un mot de données du tampon de données 12, par exemple lorsque la donnée POPOUT est à "1" (correspondant à un signal actif, c'est-à-dire à l'état haut). Le registre 14 permet en outre d'isoler le coeur du circuit 1 par rapport au conducteur 5, et de resynchroniser le signal avec le signal d'horloge avant de l'envoyer vers le circuit 2.

Le circuit de validation 24 valide l'envoi d'un mot de données à destination du circuit 1. Le circuit de validation 24 est relié à la borne de sortie 22 pour fournir le signal POPIN et à la borne d'entrée 23 pour recevoir la donnée POPOUT. Le circuit de validation 24 reçoit le signal VAL du coeur du circuit 2 et fournit audit coeur un signal BZ. Le signal BZ indique, suivant son état, si le mot validé peut être envoyé ou non vers le premier circuit 1. Le circuit de validation 24 évalue en permanence l'espace mémoire disponible dans le tampon de données 12, en incrémentant ou en décrémentant une variable CPT représentative du nombre de mots qui peuvent être envoyés vers le tampon de données 12. Ladite variable CPT est par exemple mise à jour à chaque envoi d'un mot de données et/ou à chaque réception du signal POPOUT actif représentatif de l'extraction d'un mot de données du tampon de données 12.

Un exemple de réalisation du circuit de validation 24 est représenté sur la figure 2. Dans cet exemple, le circuit de validation 24 comporte un registre 240, des circuits logiques 241 à 243, un comparateur 244 et un compteur/décompteur 245.

Le registre 240 sert à synchroniser le signal VAL avec le mot de données du registre 20, grâce au signal d'horloge qui cadence le registre 20.

Le circuit logique 241 fournit des signaux de commande au compteur/décompteur 245 pour l'incrémenter, le décrémenter ou le maintenir à la même valeur en fonction d'un signal VAL*, qui correspond au signal VAL sortant du registre 240, du signal POPOUT et de la valeur de la variable CPT. Les signaux de commande déterminent la valeur de CPT au prochain front actif du signal d'horloge. Le tableau 1 indique ci-dessous l'évolution de la variable CPT en fonction des entrées.

**Tableau 1**

| VAL* | Valeur CPT | POPOUT | CPT suivant |
|---|---|---|---|
| Inactif | = 0 | Inactif | = CPT |
| Inactif | = 0 | actif | = CPT + 1 |
| Inactif | ≠ 0 | Inactif | = CPT |
| Inactif | ≠ 0 | actif | = CPT + 1 |
| actif | = 0 | Inactif | = CPT |
| actif | = 0 | actif | = CPT + 1 |
| actif | ≠ 0 | Inactif | = CPT - 1 |
| actif | ≠ 0 | actif | = CPT |

Le circuit logique 242 détermine l'état du signal POPIN en fonction de la valeur de la variable CPT et du signal VAL, comme indiqué dans le tableau 2 ci-dessous. Dans l'exemple décrit, le circuit logique 242 est une simple porte ET car le signal VAL* est actif au niveau « 1 » et le signal de sortie du comparateur est positionné au niveau « 1 » si la valeur de la variable CPT est non nulle.

**Tableau 2**

| VAL* | Valeur CPT | POPIN |
|---|---|---|
| Inactif | = 0 | Inactif |
| Inactif | ≠ 0 | Inactif |
| actif | = 0 | Inactif |
| actif | ≠ 0 | actif |

Le circuit logique 243 est par exemple une porte NON qui inverse le signal de sortie du comparateur 244, fournissant ainsi le signal BZ actif au niveau « 1 » lorsque la variable CPT est égale à zéro.

Le comparateur 244 est relié à la sortie du compteur 245 pour comparer la variable CPT à la valeur zéro et fournir un signal, qui est par exemple au niveau « 1 » lorsque la variable est non nulle et au niveau « 0 » lorsque celle-ci est nulle. A titre d'exemple, une porte NON-ET disposant d'autant d'entrées que la variable CPT comporte de bits peut convenir comme comparateur.

Le compteur/décompteur 245 permet d'incrémenter et de décrémenter la variable CPT représentative de l'espace mémoire disponible dans le tampon 12. De nombreux types de compteur/décompteur peuvent être utilisés. Préférentiellement, le compteur/décompteur 245 comporte un registre 246, un multiplexeur 247, un circuit d'incrémentation 248 et un circuit de décrémentation 249.

Le registre 246 est dimensionné pour contenir un nombre de bits permettant de pouvoir compter de 0 à N, où N est un entier correspondant au nombre de mots de données que peut mémoriser le tampon 12. Le registre peut être positionné, par exemple lors d'une initialisation du circuit, à la valeur N. La sortie du registre 246 constitue la sortie du compteur/décompteur 245 et elle est reliée à l'entrée du comparateur 244. L'entrée du registre 246 est reliée à une sortie de données du multiplexeur 247 pour mémoriser une nouvelle valeur de la variable CPT lors de chaque front du signal d'horloge.

Le circuit d'incrémentation 248 comprend une entrée reliée à la sortie du registre 246 et une sortie qui délivre la variable CPT incrémentée d'une unité. Le circuit de décrémentation 249 comprend une entrée reliée à la sortie du registre 246 et une sortie qui délivre la variable CPT décrémentée d'une unité.

Le multiplexeur 247 dispose de trois entrées de données et d'une entrée de commande. L'entrée de commande est reliée au circuit logique 241 pour recevoir les signaux de commande indiquant quelle entrée de données doit être reliée à la sortie de données. L'une des entrées de données est reliée à la sortie du registre 246 pour permettre de garder la variable CPT inchangée. Une autre entrée de données est reliée à la sortie du circuit d'incrémentation 248 pour pouvoir incrémenter la variable CPT. La dernière entrée de données est reliée à la sortie du circuit de décrémentation 249 pour décrémenter la variable CPT.

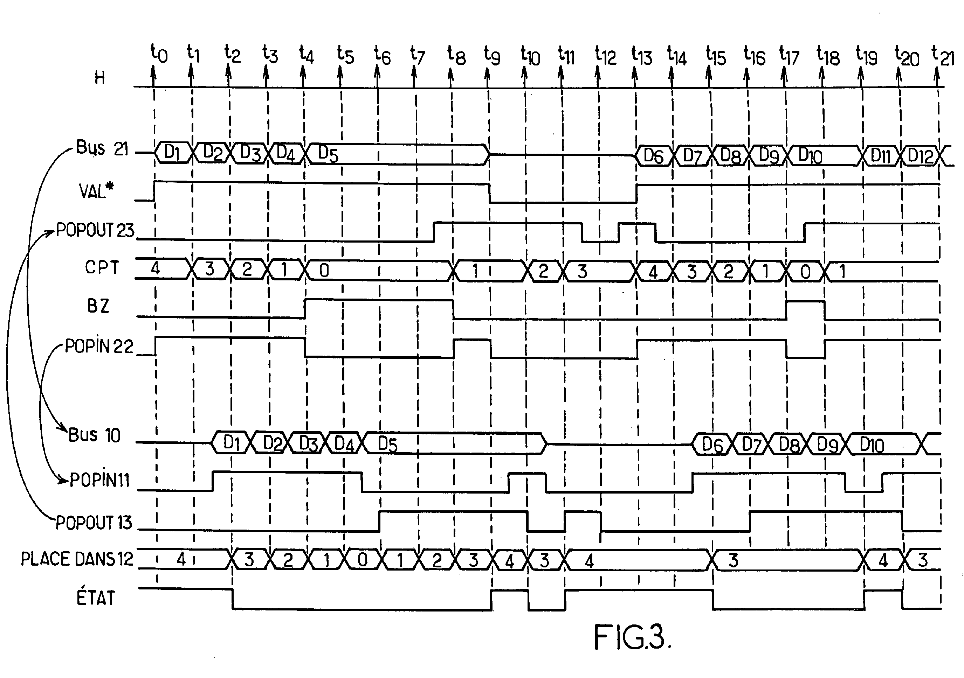

Deux exemples de transfert de données du circuit 2 vers le circuit 1 sont illustrés par la figure 3. Dans ces exemples, les conducteurs entraînent un retard de propagation égal à 1,5 fois la période du signal d'horloge. La taille du tampon de données 12 correspond à quatre mots de données, et le registre 246 est un registre de trois bits.

Le signal d'horloge H est représenté par un peigne de Dirac où chaque impulsion correspond à un front actif de dudit signal d'horloge. Chaque impulsion est espacée de l'impulsion suivante par une période du signal d'horloge. Comme indiqué précédemment, le signal d'horloge est reçu de manière synchrone par tous les circuits. Les instants tᵢ, indiqués au dessus du signal d'horloge H, permettent de se repérer chronologiquement dans les indications qui suivent.

Le premier exemple est décrit entre les instants t₀ et t₁₃, et le deuxième exemple est décrit entre les instant t₁₃ et t₂₁. Ces deux exemples sont considérés comme réalisés de manière successive afin de mettre en évidence les avantages de l'invention par rapport à l'état de la technique.

On suppose que, avant l'instant t₀, le tampon 12 est vide, la variable CPT est à la valeur « 4 » qui indique que quatre mots de données peuvent être envoyés vers le circuit 1. Le coeur du circuit 2 se prépare à envoyer un premier mot de données D1 et le signal VAL (non représenté) est positionné à un niveau actif.

A l'instant t₀, le mot D1 est mémorisé dans le registre 20, le signal VAL est mémorisé dans le registre 240 et le signal VAL* devient actif. Le mot D1 apparaît sur le port 21 et commence à se propager sur les conducteurs 3. Le signal POPIN devient actif et son front d'activation se propage sur le conducteur 4. Le circuit logique 241 positionne le multiplexeur 247 afin de décrémenter la variable CPT en réponse au prochain front d'horloge. Le signal BZ reste inactif et le coeur du circuit 2 peut préparer un deuxième mot de données D2 à envoyer.

A l'instant t₁, la variable CPT est décrémentée et le mot prend la valeur « 3 », le mot D2 est mémorisé par le registre 20 et apparaît sur le port 21, et le signal POPIN reste actif sur la borne de sortie 22. Le coeur du circuit 2 prépare un autre mot de données D3 à envoyer.

Entre les instants t₁ et t₂, le mot D1 et le front d'activation du signal POPIN arrivent au niveau du premier circuit 1. Compte tenu du temps de propagation sur les conducteurs respectivement 3 et 4. On notera que les conducteurs 3 à 5 agissent comme des canaux de transmission et peuvent supporter plusieurs données en même temps, qui se propagent successivement sur la longueur desdits conducteurs.

A l'instant t₂ puis à l'instant t₃, le circuit 2 délivre le mot de données D3 puis un autre mot de données D4 sur le port 21 et le signal POPIN reste activé sur la borne de sortie 22 pour valider les deux envois. La variable CPT est décrémentée et prend les valeurs 2 puis 1. Après t₃, le coeur du circuit 2 prépare les données suivantes à savoir un mot de données.

Du coté du circuit 1, à l'instant t₂, le tampon 12 mémorise le mot de données D1, dont l'envoi est validé par l'activation du signal POPIN sur la borne d'entrée 11. Aux instants t₃, t₄ et t₅, le tampon 12 mémorise successivement les mots de données D2, D3, D4. Aucun mot de données n'étant sorti du tampon 12 à l'instant t₅, il n'y a plus d'espace mémoire disponible dans ledit tampon permettant à un autre mot de données d'être mémorisé dans le tampon sans écraser un autre mot de données.

Néanmoins, à l'instant t₄, la variable CPT était passée à la valeur « 0 ». Le passage à la valeur « 0 » de la variable CPT entraîne la désactivation du signal POPIN au niveau de la borne de sortie 22 du circuit 2, alors que le mot de données D5 est positionné sur le port 21. En outre le signal BZ devient actif, indiquant ainsi au coeur du circuit 2 que le mot de données D5 ne peut pas être envoyé et donc qu'il est inutile de préparer un mot de données suivant.

De l'instant t₄ à l'instant t₇, rien ne change au niveau du circuit 2. Le mot de données D5 est maintenu sur le port 21 en attendant la validation d'envoi. Le signal POPIN reste inactif. Ainsi, aux instants t₅ à t₇, le mot D5 est présent au niveau du port 10 du circuit 1 mais n'est pas validé par le signal POPIN et donc n'est pas mémorisé dans le tampon 12.

Parallèlement, entre les instants t₅ et t₆, le coeur du circuit 1 active le signal de lecture/effacement LECT/EFF pour indiquer qu'il lit le mot de données D1 et que celui-ci peut être effacé du tampon 12. Le signal est échantillonné à l'instant t₆ par le registre 14 qui active alors le signal POPOUT au niveau de la borne de sortie 13. Le coeur du circuit 2 continue de lire les mots de données tant que le signal d'état reste inactif, indiquant ainsi que le tampon 12 n'est pas vide. Le signal POPOUT est ainsi maintenu après chaque lecture d'un mot de données.

Le front d'activation du signal POPOUT arrive au niveau de la borne d'entrée 23 entre les instants t₇ et t₈. La prise en compte du signal POPOUT par le circuit de validation 24 se fait à l'instant t₈. La variable CPT est incrémentée et passe à la valeur « 1 ». Le signal BZ est désactivé. Le signal POPIN peut alors être activé au niveau de la borne 22, cette activation se répercutant au niveau de la borne d'entrée 11 entre les instants t₉ et t₁₀.

Dans l'exemple, le coeur du circuit 2 n'ayant pas d'autre mot de données à envoyer avant l'instant t₁₃, le signal VAL est désactivé dès que le signal BZ devient inactif car le mot de données D5 est considéré comme transmis. Le signal VAL* devient alors inactif entre les instants t₉ et t₁₃, le signal POPIN reste également inactif entre les instants t₉ et t₁₃. Le port 21 peut être maintenu à n'importe quelle valeur, cela est représenté sur la figure 3 par une absence de mot de données entre les instants t₉ et t₁₃.

A l'instant t₉, le signal POPOUT reste actif indiquant qu'un mot de données a été extrait du tampon 12 mais le mot de données D5 vient également d'être envoyé. La variable CPT devant être simultanément incrémentée et décrémentée, celle-ci reste inchangée à la valeur « 1 ».

Parallèlement, de t₆ à t₉, le coeur du circuit 1 a continué de lire les données présentes dans le tampon 12 jusqu'à ce que le tampon 12 soit vide, provoquant l'activation du signal d'état à l'instant t₉. Le signal POPOUT est maintenu actif au niveau de la borne de sortie 13 jusqu'à l'instant t₁₀ pour indiquer les lectures successivement effectuées.

A l'instant t₁₀, le mot de donnée D5 est présent au niveau du port 10 et le signal POPIN est actif au niveau de la borne d'entrée 11, ce qui permet de mémoriser D5 dans le tampon 12. Le signal d'état est désactivé à l'instant t₁₀ et le mot de données D5 est lu par le coeur du circuit 1 à l'instant t₁₀.

A l'instant t₁₁, le signal d'état est réactivé jusqu'à la réception d'un prochain mot de données. Le signal POPOUT est activé sur la borne de sortie 13 de t₁₁ à t₁₂ pour indiquer l'extraction de D5 du tampon 12.

Le signal POPOUT étant actif sur la borne d'entrée 23 aux instants t₁₀ et t₁₁, la variable CPT est incrémentée successivement et prend les valeurs « 2 » puis « 3 ». A l'instant t₁₂, le signal POPOUT est inactif sur la borne d'entrée 23, ce qui maintient la variable CPT à la valeur « 3 ». A l'instant t₁₃, le signal POPOUT est actif sur la borne d'entrée 23, ce qui incrémente la variable CPT à la valeur « 4 ».

Ce premier exemple montre qu'il est possible d'envoyer de manière successive les mots de données D1 à D4 tout en évitant d'envoyer le mot de données D5 avant de recevoir un quelconque signal du circuit 1. Cet exemple montre que l'invention permet d'envoyer une succession de mots de données sans qu'il soit nécessaire d'attendre entre chaque envoi une information indiquant qu'il est possible d'envoyer un nouveau mot de données vers le tampon 12. Cependant, ce premier exemple montre un cas où les mots de données attendent dans le tampon 12 avant d'être lus par le coeur du circuit 1, et ne permet pas de montrer la pleine efficacité de l'invention.

Le deuxième exemple d'envoi de données, qui commence à l'instant t₁₃ montre un échange de données dans lequel le circuit émetteur 2 envoie des mots de données le plus rapidement possible et où le circuit récepteur 1 extrait les mots de données le plus rapidement possible.

A l'instant t₁₃, le tampon 12 est vide, la variable CPT est mise à la valeur « 4 ». Le mot de données D6 est mémorisé dans le registre 20 et apparaît sur le port 21, le signal VAL* devient actif. Le signal POPIN devient actif au niveau de la borne de sortie 22. Le circuit logique 241 positionne le multiplexeur 247 pour décrémenter la variable CPT au prochain front d'horloge. Le signal BZ reste inactif et le coeur du deuxième circuit 2 peut se préparer à envoyer le mot de données D7.

Aux instants t₁₄, t₁₅ et t₁₆, la variable CPT prend les valeurs respectivement « 3 », « 2 » et « 1 », les mots de donnée D7 à D9 sont successivement mémorisés dans le registre 20 et apparaissent sur le port 21, le signal POPIN reste actif sur la borne de sortie 22. Le coeur du circuit 2 prépare les mots de données suivants, respectivement D8 à D10.

Entre les instants t₁₄ et t₁₅, le mot de données D1 et l'activation du signal POPIN arrivent au niveau du circuit récepteur 1.

A l'instant t₁₅, le tampon 12 mémorise le mot de données D6 validé par l'activation du signal POPIN au niveau de la borne d'entrée 11. Le signal d'état devient inactif, et le coeur du circuit 1 lit le mot de données D6 et active le signal de lecture/effacement LECT/EFF.

A l'instant t₁₆, le mot de données D7 est mémorisé dans le tampon 12, le signal d'état reste inactif et le coeur du circuit 1 lit le mot de données D7 et maintient activé le signal de lecture/effacement. Le signal POPOUT est activé sur la borne de sortie 13.

A l'instant t₁₇, le mot de données D10 est mémorisé dans le registre 20 et apparaît sur le bus 21. Le signal VAL* reste actif, mais le signal POPOUT est toujours inactif sur la borne d'entrée 23, en sorte que la variable CPT passe à la valeur « 0 ». Le signal BZ devient actif et le signal POPIN devient inactif sur la borne de sortie 22. A ce même instant t₁₇, le mot de données D8 est mémorisé dans le tampon 12, ce qui maintient le signal d'état inactif et le coeur du circuit 1 lit ce mot D8. Le signal POPOUT reste actif sur la borne de sortie 13.

Entre les instants t₁₇ et t₁₈, l'activation du signal POPOUT arrive au niveau de la borne d'entrée 23.

A l'instant t₁₈, le signal POPOUT est pris en compte par le circuit de validation 24. La variable CPT est incrémentée et passe à « 1 », le signal BZ est désactivé et le signal POPIN devient actif sur la borne de sortie 22. Le mot de données D10 est alors envoyé au premier circuit 1. Le coeur du circuit émetteur 2 se prépare à envoyer le mot de données D11 et les signaux VAL et VAL* sont maintenus actifs. Toujours à l'instant t₁₈, le mot de données D9 rentre dans le tampon 12, le signal d'état est maintenu inactif et le coeur du circuit récepteur 1 lit ce mot D9. Le signal POPOUT reste actif sur la borne de sortie 13.

A l'instant t₁₉, le signal POPOUT est maintenu actif sur la borne d'entrée 23, alors que le mot de données D10 vient d'être envoyé. La variable CPT est maintenue à « 1 », le signal BZ reste désactivé et le signal POPIN reste actif sur la borne de sortie 22. Le mot de données D11 est alors envoyé au circuit récepteur 1. Le coeur du circuit émetteur 2 se prépare à envoyer le mot de données D12 et les signaux VAL et VAL* sont maintenus actifs. Toujours à l'instant t₁₉, le mot de données D10 apparaît sur le bus 10 mais n'est pas validé par le signal POPIN qui est inactif sur la borne d'entrée 11. Le signal d'état devient actif et le coeur du circuit 1 ne peut pas lire de données. Le signal POPOUT reste actif sur la borne de sortie 13 suite à l'extraction du mot de données D9 du tampon 12.

A l'instant t₂₀, le signal POPOUT est maintenu actif sur la borne d'entrée 23, alors que le mot dé données D11 vient d'être envoyé. La variable CPT est maintenue à « 1 », le signal BZ reste désactivé et le signal POPIN reste actif sur la borne de sortie 22. Le mot de données D12 est alors envoyé au circuit récepteur 1. Le coeur du circuit émetteur 2 se prépare à envoyer le mot de données D13 et les signaux VAL et VAL* sont maintenus actifs. Toujours à l'instant t₂₀, le mot de données D10, présent sur le bus 10, est validé par le signal POPIN qui est actif sur la borne d'entrée 11. Le signal d'état devient inactif et le coeur du circuit 1 lit le mot D10. Le signal POPOUT devient actif sur la borne de sortie 13.

L'instant t₂₁ correspond à une répétition de ce qui est fait à l'instant t₁₆. Le cycle d'opérations de t₁₆ à t₂₀ se répète tant que le circuit 2 a des données à envoyer et tant que le circuit 1 peut lire les mots de données sont présents dans le tampon 12. Ce deuxième exemple montre qu'il est possible d'atteindre un débit de données égal à 4/5 du débit maximum qui correspondrait à un mot de données envoyé par période du signal d'horloge.

Le débit maximum peut être atteint en modifiant légèrement les circuits. En effet, l'utilisation d'un tampon pouvant mémoriser cinq mots de données permet d'atteindre ce débit maximum. Si l'on souhaite obtenir toujours un débit maximum, il convient d'utiliser un tampon pouvant mémoriser N mots, avec N vérifiant N ≥ 2 * k + j, où k est un entier tel que (k - 1) * T < ΔT ≤ k * T, T étant la période minimale séparant deux envois successifs de mots de données, ΔT étant le délai de propagation d'un mot de données sur les conducteurs 3 à 5, et j étant le nombre de périodes d'horloge nécessaire pour lire un mot de données et renvoyer l'information d'extraction POPOUT.

D'une manière préférée on choisit N ≥ 2 * k car la valeur j peut être mise à zéro par exemple en utilisant un déphasage d'horloge pour l'écriture et la lecture d'un mot de données dans le tampon.

L'invention a été décrite ci-dessus dans des modes de réalisation non limitatifs. En particulier, on a considéré un transfert de données synchrone entre le circuit émetteur et le circuit récepteur, utilisant un unique signal d'horloge.

Toutefois, chaque circuit peut être activé par un signal d'horloge spécifique, si l'on prévoit des modules de synchronisation respectivement pour le signal POPIN et pour le signal POPOUT. De même, le transfert de données entre le circuit émetteur et le circuit récepteur peut être totalement asynchrone si l'on prévoit un mécanisme d'acquittement pour l'émission des signaux POPIN et POPOUT.

De plus, on a décrit un exemple de circuit électronique intégré comprenant un circuit récepteur 1 ayant un seul tampon d'entrée 12 et un circuit émetteur 2 ayant un seul registre de sortie 20.

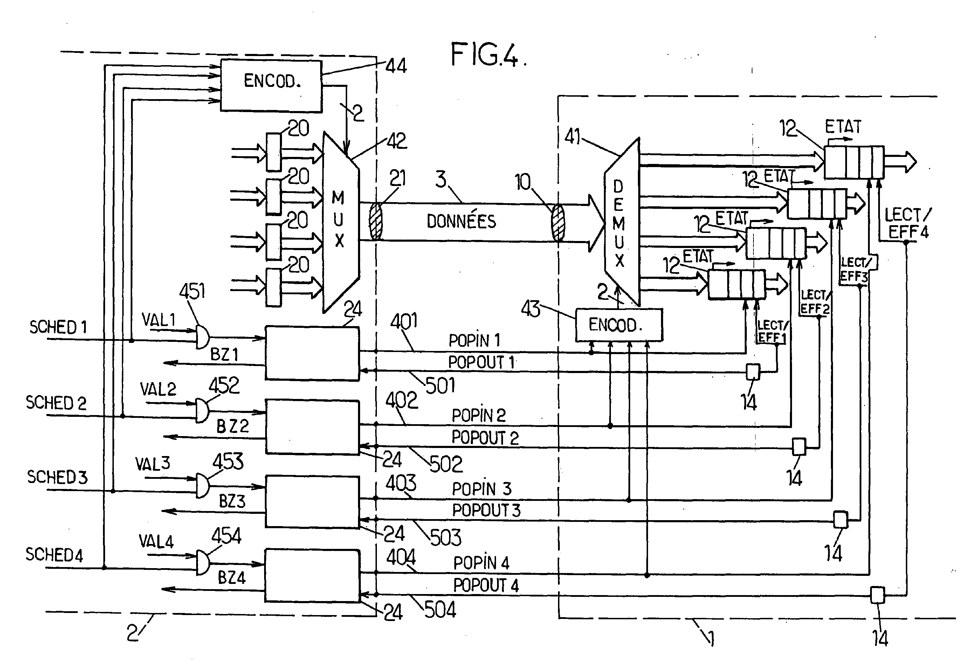

Néanmoins, en référence au schéma de la figure 4, le circuit 1 peut avoir une pluralité de tampons d'entrée 12 (ici quatre tels tampons d'entrée), couplées au port d'entrée 10 via un démultiplexeur 41. De même, le circuit 2 peut avoir une pluralité de registres de sortie 20 (quatre également), couplés au port de sortie 21 via un multiplexeur 42, et autant de circuits de validation 24. Ces circuits 24 reçoivent du coeur du circuit 2 des signaux respectivement VAL1 à VAL4, et foumissent au coeur du circuit 2 des signaux respectivement BZ1 à BZ4. Des portes OU, respectivement 451 à 454, permettent de sélectionner l'un des circuits de validation 24, à l'aide de signaux de commande respectivement Shed1 à Shed4, dont l'un au plus seulement est actif à chaque cycle d'horloge. Le circuit émetteur 2 comprend en outre un encodeur numérique 44 qui, à partir des signaux Sched1 à Sched4, commande le multiplexeur 42 de façon à ce qu'un seul des registres 20 soit couplé au port de sortie 21.

Des conducteurs 401 à 404 relient respectivement chacun des circuits de validation 24 à l'un des registres d'entrée 12 du circuit 2, pour la transmission de signaux respectivement POPIN1 à POPIN4. Inversement, des conducteurs 501 à 505 relient respectivement chacun des registres 14 et du circuit 2 à l'un des circuits de validation 24 du circuit 1, pour la transmission de signaux respectivement POPOUT1 à POPOUT4.

Du coté du circuit récepteur 2, des signaux de lecture/effacement LECT/EFF1 à LECT/EFF4 sont reçus du coeur du circuit, respectivement par chacun des registres 14, d'une part, et par les chacun des tampons d'entrée 12, d'autre part. En outre un encodeur numérique 43 commande le démultiplexeur 43 à partir de ces signaux de manière que le port d'entrée 10 soit couplé à un seul des tampons d'entrée 12 à chaque cycle d'horloge.

Le transfert de données entre les circuits 1 et 2 de la figure 4 est par ailleurs identique à celui décrit plus haut pour les circuits 1 et 2 de la figure 1.

Bien que, pour des raisons de commodité de présentation, la pluralité de flux de données décrite ci-dessus en référence à la figure 1 a été envisagée entre le circuit émetteur 1 et le circuit récepteur 2, ces flux de données peuvent être échangés entre plus d'un circuit émetteur et/ou plus d'un circuit récepteur. Cela revient à rompre l'unité fonctionnelle qui existe entre les moyens du circuit 1 d'une part, et les moyens du circuit 2 d'autre part. Dit autrement, le bus de données 3 peut être partagé (par multiplexage temporel) entre une pluralité de flux de données distincts.

On notera que, bien qu'un seul flux de données occupe le bus de données 3 à chaque cycle d'horloge, tous les circuits de validation 24 peuvent travailler en parallèle. En effet, plus d'un des signaux POPOUT1 à POPOUT4 dans l'exemple de la figure 4, peuvent être actifs en même temps.

## Revendications

1. Circuit électronique intégré comportant :
- un premier circuit (1) comprenant :
- un port d'entrée (10) pour recevoir des mots de données,
- au moins une borne d'entrée (11) pour recevoir un signal de validation (POPIN),
- au moins un tampon d'entrée (12) couplé au port d'entrée (10) et apte à mémoriser de manière temporaire un nombre déterminé de mots de données reçus via le port d'entrée, un mot de données étant mémorisé dans ledit tampon en réponse à l'activation du signal de validation,
- au moins une borne de sortie (13) pour envoyer une information d'extraction (POPOUT) lorsqu'un mot de données est extrait du tampon d'entrée ;
- un second circuit (2) comprenant :
- un port de sortie (21) pour l'envoi d'un mot de données,
- au moins une borne de sortie (22) pour envoyer le signal de validation,
- au moins une borne d'entrée (23) pour recevoir l'information d'extraction (POPOUT),
- au moins un circuit de validation (24) apte à activer le signal de validation en fonction d'une information de disponibilité représentative (CPT) de l'espace mémoire disponible dans le tampon d'entrée, ladite information de disponibilité étant mise à jour en réponse à l'envoi d'un mot de données et à réception de l'information d'extraction (POPOUT) ; et,
- une pluralité de conducteurs (3, 4, 5) reliant entre eux le second circuit et le premier circuit, et comprenant un bus de données (3) reliant le port d'entrée du premier circuit au port de sortie du second circuit, une liaison (4) reliant la borne d'entrée du premier circuit à la borne de sortie du second circuit, et une liaison (5) reliant la borne de sortie du premier circuit à la borne d'entrée du second circuit.

2. Circuit électronique intégré selon la revendication 1, dans lequel le circuit de validation comporte un compteur (245) qui est incrémenté à réception de l'information d'extraction et qui est décrémenté sur activation du signal de validation, l'information de disponibilité étant liée à la valeur courante du compteur.

3. Circuit électronique intégré selon la revendication 2, dans lequel le circuit de validation comporte un circuit logique (242) qui active le signal de validation lorsqu'un mot de données est présenté sur le port de sortie si la valeur du compteur indique que le tampon d'entrée possède de l'espace mémoire disponible pour l'enregistrement d'au moins un mot de données.

4. Circuit électronique intégré selon l'une des revendications 1 à 3, dans lequel, les conducteurs (3, 4, 5) présentant un temps de propagation (ΔT) des données compris entre k - 1 et k fois le temps minimal (T) pouvant séparer deux mots de données successivement envoyés via lesdits conducteurs, où k est un entier positif, le nombre de mots de données pouvant être mémorisés simultanément dans le tampon d'entrée est supérieur ou égal à 2 x k.

5. Circuit électronique intégré selon l'une quelconque des revendications 1 à 4, dans lequel le premier circuit est adapté pour envoyer une information d'extraction au second circuit à chaque fois qu'un mot de données est extrait du tampon d'entrée.

6. Circuit électronique intégré selon l'une quelconque des revendications 1 à 5, dans lequel le bus de données est partagé entre plusieurs flux de données par multiplexage temporel.

7. Procédé de transfert de données entre un premier circuit (1) et un second circuit (2) compris dans un circuit électronique intégré, lesdits premier et second circuits étant reliés ensemble par l'intermédiaire d'une pluralité de conducteurs (3, 4, 5), et le premier circuit (1) comprenant un tampon de données (12) apte à mémoriser de façon temporaire un nombre déterminé de mots de données, ledit procédé comprenant les étapes suivantes :
- envoi par le second circuit d'un mot de données à destination du tampon de données si une information de disponibilité représentative (CPT) de l'espace mémoire disponible dans le tampon d'entrée indique qu'au moins un mot de données peut être mémorisé dans ledit tampon d'entrée ;
- en réponse à l'extraction d'un mot de données du tampon, envoi par le premier circuit d'une information d'extraction (POPOUT) à destination du second circuit (2) ;
- en réponse à l'envoi d'un mot de données par le second circuit et/ou en réponse à la réception par le second circuit d'une information d'extraction, mise à jour de l'information de disponibilité au niveau du second circuit.

8. Procédé selon la revendication 7, dans lequel l'envoi d'un mot de données par le second circuit comprend les étapes de :
- mise du mot de données sur un bus de données reliant un port de sortie du premier circuit à un port d'entrée du premier circuit, et,
- activation d'un signal de validation transmis entre une borne de sortie du second circuit et entre une borne d'entrée du premier circuit, si l'information de disponibilité indique que le tampon d'entrée possède de l'espace mémoire disponible pour l'enregistrement d'au moins un mot de données.

9. Procédé selon l'une des revendications 7 et 8, dans lequel la mise à jour de l'information de disponibilité est réalisée par incrémentation de la valeur d'un compteur en réponse à la réception par le second circuit d'une information d'extraction (POPOUT), et par décrémentation de la valeur dudit compteur en réponse à l'envoi d'un mot de données par le second circuit.
